# EUROPEAN PATENT APPLICATION

(11) **EP 3 147 782 A1**
(43) Date of publication of application: **29.03.2017**
(21) Application number: 14892661.1
(22) Date of filing: 25.09.2014
(51) Int. Cl.: G06F 9/45

(54) **METHOD AND DEVICE FOR UPGRADING SOFTWARE**

(30) Priority: 19.05.2014 CN 201410212169
(71) Applicant: ZTE Corporation, Shenzhen, Guangdong 518057 (CN)
(72) Inventor: ZHANG, Guangdong, Shenzhen Guangdong 518057 (CN)
(74) Representative: Savi, Massimiliano
(86) International application number: PCT/CN2014/087474
(87) International publication number: WO 2015/176454

(57) **Abstract**

The present invention discloses a method and device for upgrading software. The method includes: a terminal setting a time for upgrading a software version for next time according to an upgrade status of a current software version; detecting the software version according the set time; if a new software version is detected, acquiring an upgrade package of the new software version in a wireless way; and upgrading partition data segment by segment in a partitioned upgrade method by using the acquired upgrade package. The present invention can improve the success rate for downloading the software, and complete the backup protection for the original software version and the data error processing caused by abnormal power-fail.

## Description

### Technical Field

The present invention relates to the technology related to the software upgrading of the consumption-type wireless terminal devices (with the function of connecting the Internet), and in particular, to the implementation of the wireless software upgrading service on the data-type products, such as, a mobile phone, UFI/DC, etc.

### Background

With the increasing demand for communication of people and the continuous development of the 3/4G communication technology, a large amount of wireless consumption-type electronic products appeared, they provide people with various data services, which is convenient for people to communicate and share resources at any time and any place.

After a terminal product is delivered the user's hand, the software maintenance of the terminal by the manufacturer has become a major problem. When the manufacturer needs to repair the fault or add a new function in the software of the terminal, it is required to rewrite the software version of the terminal. If the terminals in the user's hands are recycled back for software upgrading one by one, it is obviously a time-consuming and laborious work. In order to solve the problem, a Firmware Over-The-Air (referred to as FOTA) technology is generated, that is, the wireless upgrading technology for the software.

The software of the terminal in the user's hand is effectively and reliably upgraded through the air wireless downloading mode. The manufacturer can quickly propose a terminal with a new function to the market, and thereby improving the user satisfaction and recognition for the terminal.

In the firmware upgrading environment, the firmware is stored in the storage medium in the binary mode, so the file can be regarded as a byte stream. Based on the byte stream attribute of the file, the difference between files can be accurately expressed by taking byte as the unit. The upgrade package only including the difference between the bytes is used to achieve the software updating of the terminal, which is suitable for the software updating based the wireless and can save much traffic for the user.

### Summary of the Invention

The embodiment of the present invention provides a method and a device for upgrading software, to at least solve the problem of improving the success rate of the software upgrading.

According to one aspect of the present invention, a method for upgrading software is provided, including:
a terminal setting a time for upgrading a software version for next time according to an upgrade status of a current software version;
detecting the software version according to the set time;
if a new software version is detected, acquiring an upgrade package of the new software version in a wireless way; and
using the acquired upgrade package, and upgrading partition data segment by segment in a partitioned upgrading mode.

Alternatively, said a terminal setting a time for upgrading a software version for next time according to an upgrade status of a current software version includes:
when the terminal is powered off without detecting a software version, or the terminal does not need to upgrade software, or the terminal does not detect out an available upgrading package, or detects the available upgrade package but the user does not upgrade the software, setting a first fixed length time period, for the terminal to adjust a time for software version detection and upgrading for next time to the first fixed length time period.

Alternatively, said a terminal setting a time for upgrading a software version for next time according to an upgrade status of a current software version includes:
when the terminal fails to initiate software version detection or a data service is not available, setting a second fixed length time period, for the terminal to adjust a time for software version detection and upgrading for next time to the second fixed length time period.

Alternatively, said using the acquired upgrade package, and upgrading partition data segment by segment in a partitioned upgrading mode includes:
the terminal setting an upgrade sign used to characterize starting software upgrading;
determining a section of partition data to be upgraded in a current partition of the software version, and storing the partition data to a backup data area;
performing differential upgrading processing on the determined partition data to be upgraded and storing upgrade status information of the partition data;
performing storage and differential upgrading processing on various sections of partition data to be upgraded in the current partition of the software version in turn, until completing software upgrading for the current partition of the software version; and
performing the storage and differential upgrading processing on various sections of partition data to be upgraded in other partitions in turn according to the partition of the software version, until completing software upgrading for all partitions of the software version.

Alternatively, the method further includes:
when the terminal is powered on, detecting whether an upgrade sign is set;
if detecting that the upgrade sign is set, reading upgrade status information of previous software upgrading, using the upgrade status information, and restoring the stored partition data to a corresponding position in the partition of the software version ; and
using the restored partition data, and performing the storage and differential upgrading processing again to complete the software version upgrading.

According to another aspect of the present invention, a device for upgrading software is provided, including:
a setting module, arranged to set a time for upgrading a software version for next time according to an upgrade status of a current software version of a terminal;
a detection module, arranged to: detect the software version according to the set time;
an acquiring module, arranged to: if a new software version is detected, acquire an upgrade package of the new software version in a wireless way; and
an upgrading module, arranged to: use the acquired upgrade package, and upgrade partition data segment by segment in a partitioned upgrading mode.

Alternatively, when the terminal is powered off without detecting a software version, or the terminal does not need to upgrade software, or the terminal does not detect out an available upgrade package or detects the available upgrade package but the user does not upgrade the software, the setting module sets a first fixed length time period, for the terminal to adjust a time for software version detection and upgrading for next time to the first fixed length time period.

Alternatively, when the terminal fails to initiate software version detection or a data service is not available, the setting module sets a second fixed length time period, for the terminal to adjust a time for software version detection and upgrading for next time to the second fixed length time period.

Alternatively, the upgrading module is arranged to set an upgrade sign used to characterize initiating software upgrading; determine a section of partition data to be upgraded in a current partition of the software version, and store the partition data to a backup data area; perform differential upgrading processing on the determined partition data to be upgraded and store upgrade status information of the partition data; perform storage and differential upgrading processing on various sections of the partition data to be upgraded in the current partition of the software version in turn, until completing software upgrading for the current partition of the software version; and perform the storage and differential upgrading processing on various sections of partition data to be upgraded in other partitions in turn according to the partition of the software version, until completing software upgrading for all partitions of the software version.

Alternatively, the device further includes:
a restoring module, arranged to: when the terminal is powered on, detect whether an upgrade sign is set, if detecting that the upgrade sign is set, read upgrade status information of previous software upgrading, use the upgrade status information, and restore the stored partition data to a corresponding position in the partition of the software version to use the restored partition data, and perform the storage and differential upgrading processing again , to complete the software version upgrading.

Compared with the existing technology, the beneficial effect of the present invention is that:
herein, the version detection policy achieves the timed detection function on the terminal, and completes the timed detection, the failure processing, etc., and can improve the success rate of the FOTA software downloading. The software rewriting policy achieves the rewriting function of the software version on the terminal, and completes the backup protection for the original software version and the data error processing caused by abnormal power-fail.

### Brief Description of Drawings

FIG. 1 is a principle block diagram of a method for upgrading software according to an embodiment of the present invention;
FIG. 2 is a block diagram of a device for upgrading software according to an embodiment of the present invention;
FIG. 3 is a flow chart of version detection of the FOTA software upgrading according to an embodiment of the present invention;
FIG. 4 is a schematic diagram of backup and restoring control policy when the software rewriting is performed according to an embodiment of the present invention.

### Specific Embodiments

The alternative embodiments of the present invention are described in detail with reference to the accompanying drawings hereinafter. It should be understood that, the embodiments illustrated hereinafter are used to describe and explain the present invention, rather than constituting an inappropriate limitation to the present invention.

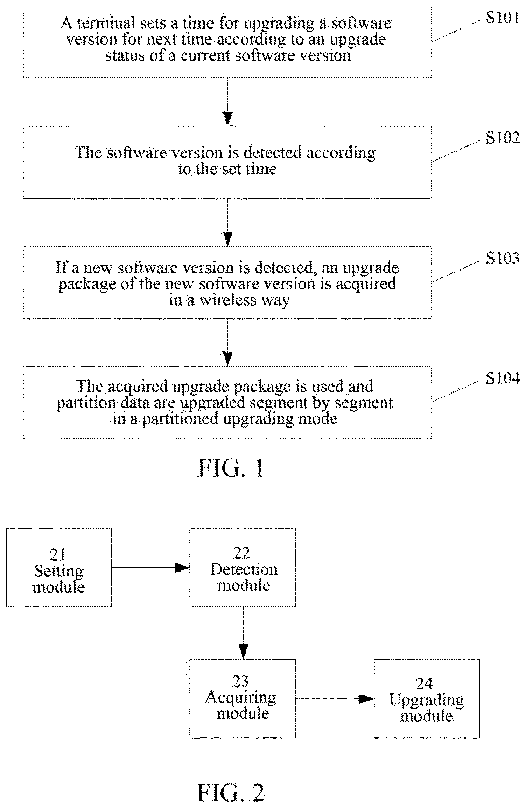

FIG. 1 is a principle block diagram of a method for upgrading software according to an embodiment of the present invention; as shown in FIG. 1, the following steps are included.

In step S101: a terminal sets a time for upgrading a software version for next time according to an upgrade status of a current software version.

Specifically, when the terminal is powered off without detecting a software version, or the terminal does not need to upgrade the software, or the terminal does not detect out an available upgrade package or detects the available upgrade package but the user does not upgrade the software, a first fixed length time period is set, and when the terminal fails to initiate software version detection or a data service is not available, a second fixed length period is set, so that the terminal adjusts a time for software version detection and upgrading for next time to the first fixed length time period or the second fixed length time period.

Through the judgment to the upgrade status of the current software version, the present invention dynamically adjusts the time for detecting and upgrading the software version, and can greatly improve the success rate of the software downloading compared to the technical scheme of performing the software version detection and upgrading at a fixed time point.

In step S102: the software version is detected according to the set time.

In step S103: if a new software version is detected, then an upgrade package of the new software version is acquired in a wireless way.

In step S104: the acquired upgrade package is used, and partition data are upgraded segment by segment in a partitioned upgrading mode.

Specifically, the terminal sets an upgrade sign used to characterize starting the software upgrading, determines a section of partition data to be upgraded in a current partition of the software version, and stores the partition data to a backup data area; performs a differential upgrade processing to the determined partition data to be upgraded and stores upgrade status information of the partition data; performs storage and differential upgrade processing on various sections of the partition data to be upgraded in the current partition of the software version in turn, until completing software upgrading for the current partition of the software version; and performs the storage and differential upgrading processing on various sections of partition data to be upgraded in other partitions in turn according to the partition of the software version, until completing the software upgrading for all partitions of the software version.

If an abnormal situation, such as, power-off, etc., occurs in the software upgrading process, the terminal detects whether the upgrade sign is set when it is powered on again; if detecting that the upgrade sign is set, upgrade status information of previous software upgrading is read, and the stored partition data are restored to a corresponding position in the partition of the software version by using the upgrade status information; and the storage and differential upgrading processing are performed again by using the restored partition data, so as to complete the software version upgrading.

The present invention enables the terminal restore the original data during the data error processing caused by the situations, such as, abnormal power-fail, etc., through the backup protection for the original software version, thereby ensuring the normal upgrading for the software.

FIG. 2 is a block diagram of a device for upgrading software according to an embodiment of the present invention; as shown in FIG. 2, the device includes the following modules: a setting module 21, a detection module 22, an acquiring module 23 and an upgrading module 24. Herein,
the setting module 21 is arranged to set a time for upgrading a software version for next time according to an upgrade status of a current software version of a terminal. Specifically, a first fixed length time period is set when the terminal is powered off without detecting a software version, or the terminal does not need to upgrade the software, or the terminal does not detect out an available upgrade package or detects the available upgrade package but the user does not upgrade the software, and a second fixed length time period is set when the terminal fails to initiate software version detection or a data service is not available, so that the terminal adjusts a time for software version detection and upgrading for next time to the first fixed length time period or the second fixed length time period.

The detection module is arranged to: detect a software version according to a set time.

The acquiring module 23 is arranged to: if a new software version is detected, acquire an upgrade package of the new software version in a wireless way.

The upgrade module 24 is arranged to: use the acquired upgrade package and upgrade partition data segment by segment in a partitioned upgrading mode. Specifically, the terminal sets an upgrade sign used to characterize starting the software upgrading, and then determines a section of partition data to be upgraded in a current partition of the software version, and stores the partition data to a backup data area; performs a differential upgrading processing on the determined partition data to be upgraded and stores upgrade status information of the partition data; and then performs storage and differential upgrading processing on various sections of the partition data to be upgraded in the current partition of the software version in turn, until completing software upgrading for the current partition of the software version; and finally performs the storage and differential upgrade processing on various sections of partition data to be upgraded in other partitions in turn according to the partition of the software version, until completing the software upgrading for all partitions of the software version.

Furthermore, the device further includes a restoring module, arranged to: when the terminal is powered on, detect whether an upgrade sign is set, if detecting that the upgrade sign is set, then read upgrade status information of previous software upgrading, and use the upgrade status information, restore the stored partition data to a corresponding position in the partition of the software version perform the storage and differential upgrade processing again by using the restored partition data, and thereby completing the software version upgrading.

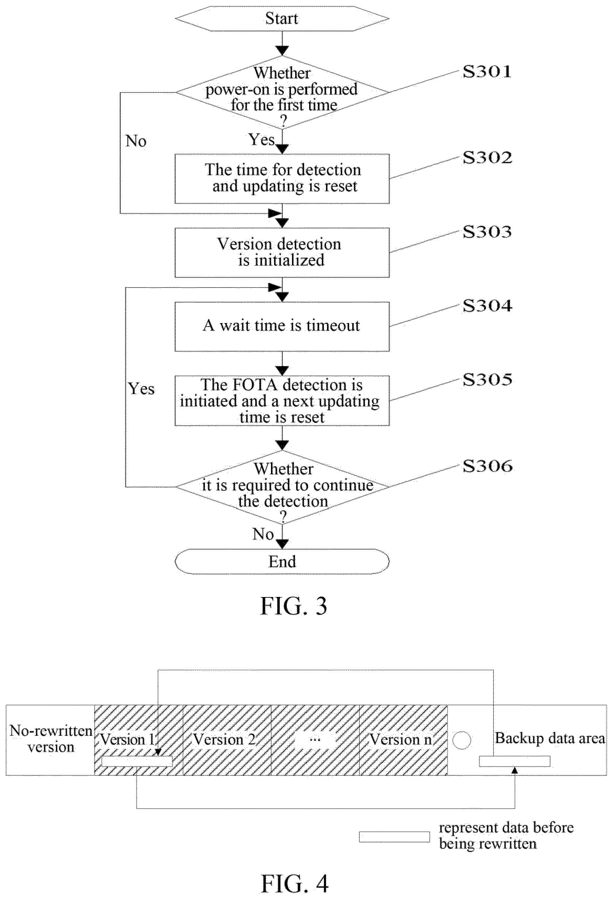

The version detection policy and software rewriting policy of the FOTA technology provided by the present invention is closely connected with the robustness of the FOTA software upgrading. The present invention is further illustrated combining the embodiments shown in FIG. 3 and FIG. 4 hereinafter.

First, Version detection policy
if the terminal needs to perform the FOTA upgrading, it first needs to interact with the server through the network according to the OMA protocol, to query whether there is an available software updating version on the server; if there is, then the user is prompted to download, and if there is not, the user is prompted that there is no new version.

In order to improve the success rate of the detection for the FOTA software upgrading version, the version detection process is shown in FIG. 3, including the following steps.

In step 301: the terminal judges whether the terminal is powered on at the first time; if yes, then the step S302 is executed; otherwise, the step S303 is executed.

In step S302: a time for detection and upgrading is reset.

In step S303: an initialization process for version detection is performed.

In step S304: a wait timer is timeout.

In step S305: when the timer is timeout, the FOTA detection is initiated and the time for the next upgrading is reset.

In step S306: it is judged whether it is required to continue the detection; if yes, then step S304 is executed, otherwise the process is ended.

For example, it is assumed that T is the version detection time period set by the user, of which the unit is day, and there are three options, 1, 15 and 30.
1) the automatic upgrading time is set at the first powering on.
   The default time for first automatic upgrading is the first powering on time plus a random time within a T days (set as x, of which the length is recorded by minute), and 0<x< = T*24*60;
2) when the automatic upgrading time for this time reaches, and the timer is required to reset when initiating the automatic upgrading for this time.
   The automatic upgrading time for next time is: period T plus a random time within 24 hours which is set as x, of which the length is recorded by minute, and 0<x< = 24*60;
3) the timer is reset under the abnormal situation.
   a) if the following abnormal situations 1, 2 and 3 occur during the automatic upgrading for this time, then the timer is reset, and the next automatic upgrading time is: period T plus a random time within 24 hours, that is, the random time within 24 hours is set as x, of which the length is recorded by minute, and 0<x< = 24*60.
   b) if the following abnormal situation 4 occurs during the automatic upgrading for this time, then the timer is reset, and the next automatic upgrading time is: a random time within 24 hours, so as to provide the user with more detection times.
   c) if the following abnormal situations 5 and 6 occur during the automatic upgrading for this time, then the timer is reset, and the next automatic upgrading time is: after 6 hours, so as to provide the user with more detection times.

The above abnormal situations include:
1. the upgrade package is detected, but the user does not upgrade;
2. it is detected that there is no available upgrade package;
3.when the automatic upgrading time reaches, the device is roaming and does not need to upgrade;
4. the user misses the automatic detection and the power-on is performed;
5. when the automatic upgrading time reaches, the data service is not available;
6. when the automatic upgrading time reaches, it is failed to initiate a detection for a new version

Second, software rewriting policy
after the FOTA differential upgrade package is downloaded to the terminal device, then it is required to implement the software rewriting operation, that is, the original software version of the terminal is written based on the content of the differential package. The implementation of the specific policy of software rewriting is illustrated by taking FIG. 4 as an example hereinafter.

The software version of the terminal is generally stored on the storage medium in form of block (partition). the leftmost block in FIG. 4 is "non-rewritten version" which always cannot be rewritten, and have the ability to start the system; the blocks with the names of "version 1", "version 2", "version n" in FIG. 4 are normal partitions of the system, and are software version which can be upgraded by the FOTA; the rightmost block in FIG. 4 is a "backup data area", the circle box therein is the "upgrade sign", and the "backup data area" is used for storing the backup of the rewritten data during the FOTA software upgrading.
1) the software rewriting policy under normal situations:
   the "upgrade sign" in the "backup data area" is set before starting the FOTA software upgrading;
   a section of data in the "version x" (for example, version 1 as shown in FIG. 4) partition are read and stored to the "backup data area ";
   the differential upgrading and rewriting are performed on the section of data that had been read in step b, and the current upgrade status information is recorded and stored;
   steps b and c are executed repeatedly to perform the differential upgrade in turn; after one partition is upgraded completely, and then another partition is upgraded, until completing the upgrading for all partitions;
   the "upgrade sign" in the "backup data area" is cleared, the version upgrading is completed for this time, and the terminal is restarted.

   When the FOTA is interrupted, caused by some reasons, in the above normal FOTA upgrading process (such as the user forces to pull the battery, power-off is automatically performed due to the battery power shortage), rewriting or restoring is performed according to the following policies during the next power-on.
2) the software rewriting policy under abnormal situations:
   it is checked whether the "upgrade sign" in the "backup data area" is set; and if yes, then the step b is forwarded to; if not, then step h is forwarded to;
   the upgrade status information of the previous FOTA upgrading is read, the abnormal partition data are restored according to the upgrade status information and the backup data in the "backup data area";
   it is judged whether it has entered the abnormal processing twice; if yes, then step h is forwarded to, and the FOTA upgrading for this time is ended;
   a section of data in the "version x" partition after restoring are read and stored to the "backup data area";
   the differential upgrading and rewriting are performed on the section of data that had been read in step d, and the current upgrade status information is recorded and stored;
   steps d and e are executed repeatedly to perform the differential upgrade in turn; after one partition is upgraded completely, and then another partition is upgraded, until completing the upgrading for all partitions;
   the "upgrade sign" in the "backup data area" is cleared, the version upgrading is completed for this time, and the terminal is restarted;
   the terminal is started normally.

To sum up, the present invention has the following technical effects:
the present invention can improve the success rate of software version downloading and the success rate of software version upgrading.

Although the above description describes the present invention in detail, the present invention is not limited here. Those skilled in the art can make various modifications according to the principles of the present invention. Therefore, all the modifications made according to the principles of the present invention should be understood to be embodied in the protection scope of the present invention.

### Industrial Applicability

As mentioned above, the method and device for upgrading software provided by the embodiment of the present invention have the following beneficial effects: the version detection policy achieves the timed detection function, and completes the timed detection, the failure processing, etc., and can improve the success rate of the FOTA software downloading; the software modification policy achieves the modification function of the software version on the terminal, and completes the backup protection for the original software version and the data error processing caused by abnormal power-fail.

## Claims

1. A method for upgrading software, comprising:
a terminal setting a time for upgrading a software version for next time according to an upgrade status of a current software version;
detecting the software version according to the set time;
if a new software version is detected, acquiring an upgrade package of the new software version in a wireless way; and
using the acquired upgrade package, and upgrading partition data segment by segment in a partitioned upgrading mode.

2. The method according to claim 1, wherein, said a terminal setting a time for upgrading a software version for next time according to an upgrade status of a current software version comprises:
when the terminal is powered off without detecting a software version, or the terminal does not need to upgrade software, or the terminal does not detect out an available upgrade package, or detects the available upgrade package but the user does not upgrade the software, setting a first fixed length time period for the terminal to adjust a time for software version detection and upgrading for next time to the first fixed length time period.

3. The method according to claim 1, wherein, said a terminal setting a time for upgrading a software version for next time according to an upgrade status of a current software version comprises:
when the terminal fails to initiate software version detection or a data service is not available, setting a second fixed length time period for the terminal to adjust a time for software version detection and upgrading for next time to the second fixed length time period.

4. The method according to any one of claims 1-3, said using the acquired upgrade package, and upgrading partition data segment by segment in a partitioned upgrading mode comprises:
the terminal setting an upgrade sign used to characterize starting software upgrading;
determining a section of partition data to be upgraded in a current partition of the software version, and storing the partition data to a backup data area;
performing differential upgrading processing on the determined partition data to be upgraded and storing upgrade status information of the partition data;
performing storage and differential upgrading processing on various sections of partition data to be upgraded in the current partition of the software version in turn, until completing software upgrading for the current partition of the software version; and
performing the storage and differential upgrade processing on various sections of partition data to be upgraded in other partitions in turn according to the partition of the software version, until completing software upgrading for all partitions of the software version.

5. The method according to claim 4, further comprising:
when the terminal is powered on, detecting whether an upgrade sign is set;
if detecting that the upgrade sign is set, reading upgrade status information of previous software upgrading, using the upgrade status information, and restoring the stored partition data to a corresponding position in the partition of the software version ; and
using the restored partition data, and performing the storage and differential upgrade processing again to complete the software version upgrading.

6. A device for upgrading software, comprising:
a setting module, arranged to set a time for upgrading a software version for next time according to an upgrade status of a current software version of a terminal;
a detection module, arranged to: detect the software version according to the set time;
an acquiring module, arranged to: if a new software version is detected, acquire an upgrade package of the new software version in a wireless way; and
an upgrading module, arranged to: use the acquired upgrade package, and upgrade partition data segment by segment in a partitioned upgrading mode.

7. The device according to claim 6, wherein, when the terminal is powered off without detecting a software version, or the terminal does not need to upgrade software, or the terminal does not detect out an available upgrade package, or detects the available upgrade package but the user does not upgrade the software, the setting module sets a first fixed length time period for the terminal to adjust a time for software version detection and upgrading for next time to the first fixed length time period.

8. The device according to claim 6, wherein, when the terminal fails to initiate software version detection or a data service is not available, the setting module sets a second fixed length time period for the terminal to adjust a time for software version detection and upgrading for next time to the second fixed length time period.

9. The device according to any one of claims 6-8, wherein, the upgrade module is arranged to set an upgrade sign used to characterize initiating software upgrading; determine a section of partition data to be upgraded in a current partition of the software version, and store the partition data to a backup data area; perform differential upgrading processing on the determined partition data to be upgraded and store upgrade status information of the partition data; perform storage and differential upgrading processing on various sections of e partition data to be upgraded in the current partition of the software version in turn, until completing software upgrade for the current partition of the software version; and perform the storage and differential upgrading processing on various sections of partition data to be upgraded in other partitions in turn according to the partition of the software version, until completing software upgrading for all partitions of the software version.

10. The device according to claim 9, further comprising:
a restoring module, arranged to: when the terminal is powered on, detect whether an upgrade sign is set; if detecting that the upgrade sign is set, read upgrade status information of previous software upgrading, using the upgrade status information, and restore the stored partition data to a corresponding position in the partition of the software version , to use the restored partition data and perform the storage and differential upgrade processing again to complete the software version upgrading.
